# EUROPEAN PATENT SPECIFICATION

(11) **EP 2 250 622 B1**
(45) Date of publication and mention of the grant of the patent: **10.12.2014**
(21) Application number: 09716904.9
(22) Date of filing: 13.02.2009
(51) Int. Cl.: G06F 17/30

(54) **SERVICE PREVIEW AND ACCESS FROM AN APPLICATION PAGE**
SERVICEVORSCHAU UND -ZUGANG AUF EINER ANWENDUNGSSEITE
APERÇU D'UN SERVICE ET ACCÈS À CELUI-CI À PARTIR D'UNE PAGE D'UNE APPLICATION

(30) Priority: 05.03.2008 US 42333
(43) Date of publication of application: 17.11.2010
(73) Proprietor: Microsoft Corporation, Redmond, WA 98052-6399 (US)
(72) Inventor: KIM, Jane T., Redmond, Washington 98052-6399 (US); PAVLICIC, Miladin, Redmond, Washington 98052-6399 (US); RISNEY, Dave, Redmond, Washington 98052-6399 (US); BENNY, Michael, Redmond, Washington 98052-6399 (US)
(74) Representative: Goddar, Heinz J.
(86) International application number: PCT/US2009/034122
(87) International publication number: WO 2009/111152

(56) References cited:
- WO-A1-2007/142430
- KR-A- 20070 115 629
- US-A1- 2002 073 058
- US-A1- 2006 095 343
- US-A1- 2006 143 568
- US-B1- 6 785 670

## Description

### BACKGROUND

In order to look up information from an application page, such as a web page using another web page, a user typically has to perform a number of manual steps. In addition, during this process it may not be very easy for a user to return to their initial location. For example, if a user is reading an article about a restaurant review, they may wish to ascertain whether the restaurant is close to the location of a hotel in which they are staying. To do this, the user may wish to use a web-accessible mapping site. Accordingly, the user may copy the restaurant information from the article, navigate to the mapping site, and then paste the restaurant's information into an appropriate field at the mapping site.

Once the user has ascertained the restaurant's location, they may then wish to return to the site from which they originally navigated. Needless to say, this can be cumbersome and can result in a somewhat inefficient user experience.

WO 2007/142430 A1 discloses a method for previewing and comparing search results of search sites, and previewing contents of titles by performing an event for the linked titles of the search sites.

US 6,785,670 B1 discloses a system for automatically initiating an Internet-based search from within a document displayed by a document viewer.

### SUMMARY

In one or more embodiments, users are able to access small previews of a service from within their present application context. For example, users can install various services in an application, such as a Web browser. Based upon a user action within the application, a user interface instrumentality can be presented to the user to enable them to access a list of services that are installed in the application. By taking an action with respect to the list of services, a user can access a preview of the service. For example, in at least some embodiments, if a user hovers their cursor over a particular listed service, they can receive a preview of that service from which further service functionality can be accessed. Further service functionality can be accessed from a preview by interacting with the preview in a particular way. For example, a user can click on the service preview in order to access additional service functionality. By doing so, a user can be navigated to the additional service functionality, as will become apparent below. Alternately or additionally, a user can click on a link within the preview in order to access further service functionality.

The object of the invention is solved by the features of the independent claims, further embodiments are the subject matter of the dependent claims.

### BRIEF DESCRIPTION OF THE DRAWINGS

Fig. 1 illustrates an operating environment in which the inventive principles can be employed in accordance with one or more embodiments.
Fig. 2 illustrates a user interface for a Web browser in accordance with one or more embodiments.
Fig. 3 illustrates a user interface for a Web browser in accordance with one or more embodiments.
Fig. 4 illustrates a user interface for a Web browser in accordance with one or more embodiments.
Fig. 5 is a flow diagram that describes steps in a method in accordance with one or more embodiments.
Fig. 6 illustrates a user interface for a Web browser in accordance with one or more embodiments.
Fig. 7 is a flow diagram that describes steps in a method in accordance with one or more embodiments.
Fig. 8 is a block diagram of a system in accordance with one or more embodiments.

### DETAILED DESCRIPTION

### Overview

In one or more embodiments, users are able to access small previews of a service from within their present application context. In one or more embodiments, at least some of the services are Web-accessible services provided by a remote Web-accessible service provider. For example, users can install various services in an application, such as a Web browser. Based upon a user action within the application, a user interface instrumentality can be presented to the user to enable them to access a list of services that are installed in the application. By taking an action with respect to the list of services, a user can access a preview of the service. For example, in at least some embodiments, if a user hovers their cursor over a particular listed service, they can receive a preview of that service from which further service functionality can be accessed. Further service functionality can be accessed from a preview by interacting with the preview in a particular way. For example, a user can click on the service preview in order to access additional service functionality. By doing so, a user can be navigated to the additional service functionality, as will become apparent below. Alternately or additionally, a user can click on a link within the preview in order to access further service functionality.

In the discussion below, the inventive embodiments are described in the context of an application in the form of a Web browser. It is to be appreciated and understood, however, that any suitable application can employ the inventive techniques described below. Such applications can include those that are configured to handle Web content. For example, such applications can include email applications, instant messaging applications, word processing applications and the like.

In the discussion that follows, a section entitled "Operating Environment" describes but one environment in which the various embodiments can be employed. Following this, a section entitled "Example Service Preview" is provided and describes a service preview in accordance with one or more embodiments. Next, a section entitled "Example Cascading Menu" is provided and describes a cascading menu in accordance with one or more embodiments. Following this, a section entitled "Example Rendering Algorithm" is provided and describes characteristics of a rendering algorithm in accordance with one or more embodiments. Next, a section entitled "Other Invocations of Service Previews" is provided and describes otherways in which service previews can be invoked. Following this, a section entitled "Example System" is provided and describes an example system that can be used to implement one or more embodiments.

### Operating Environment

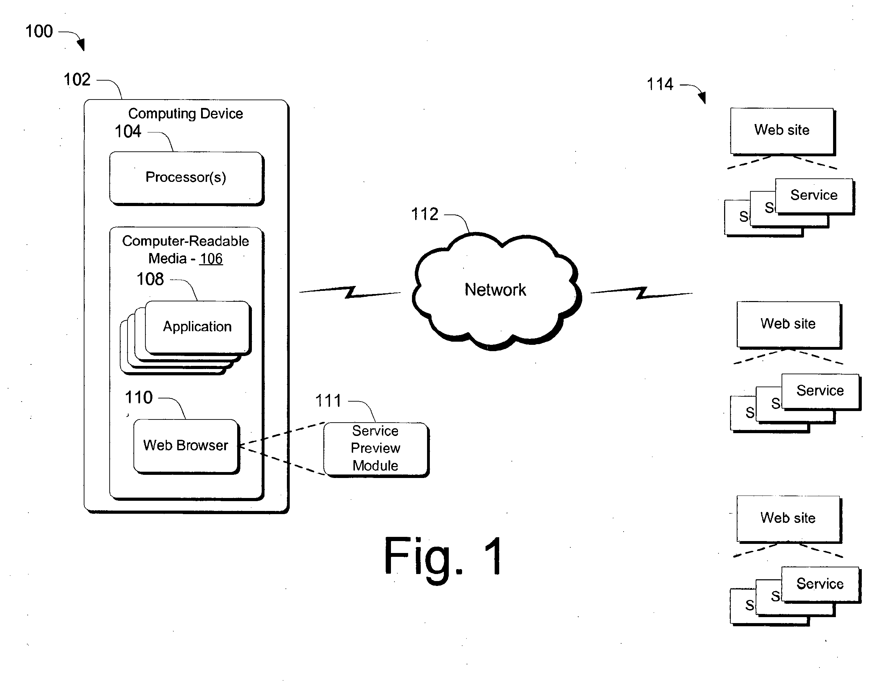

Fig. 1 illustrates an operating environment in accordance with one or more embodiments, generally at 100. Environment 100 includes a computing device 102 having one or more processors 104, one or more computer-readable media 106 and one or more applications 108 that reside on the computer-readable media and which are executable by the processor(s). Applications 108 can include any suitable type of application such as, by way of example and not limitation, reader applications, e-mail applications, instant messaging applications, and a variety of other applications. An application in the form of a Web browser 110 can include or otherwise make use of a service preview module 111 that operates as described above and below.

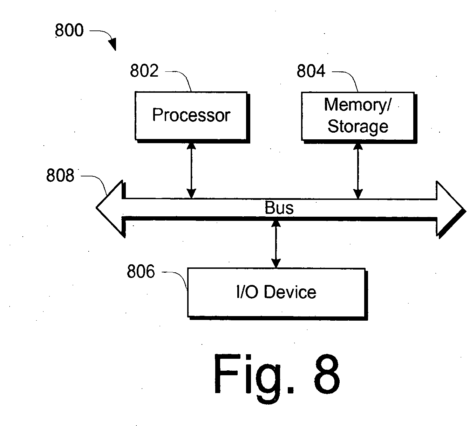

The computer-readable media can include, by way of example and not limitation, all forms of volatile and non-volatile memory and/or storage media that are typically associated with a computing device. Such media can include ROM, RAM, flash memory, hard disk, removable media and the like. One specific example of a computing device is shown and described below in Fig. 8.

In addition, environment 100 includes a network 112, such as the Internet, and one or more web sites 114 from and to which content can be received and sent. Websites 114 can offer a variety of services that can be integrated by applications 108 and/or Web browser 110, as will become apparent below.

Computing device 102 can be embodied as any suitable computing device such as, by way of example and not limitation, a desktop computer, a portable computer, a handheld computer such as a personal digital assistant (PDA), cell phone, and the like.

### Example Service Preview

When a user has one or more services that they can enable, a first step in the service preview process is the discovery of services that pertain to a particular action that the user has taken. So, for example, when the user makes a text selection, in one or more embodiments, a user interface instrumentality, such as an in-page discovery button is rendered for the user to inform the user that one or more services have been found that are relevant to a given selection. When the user clicks on the button, a menu of available services is rendered for the user.

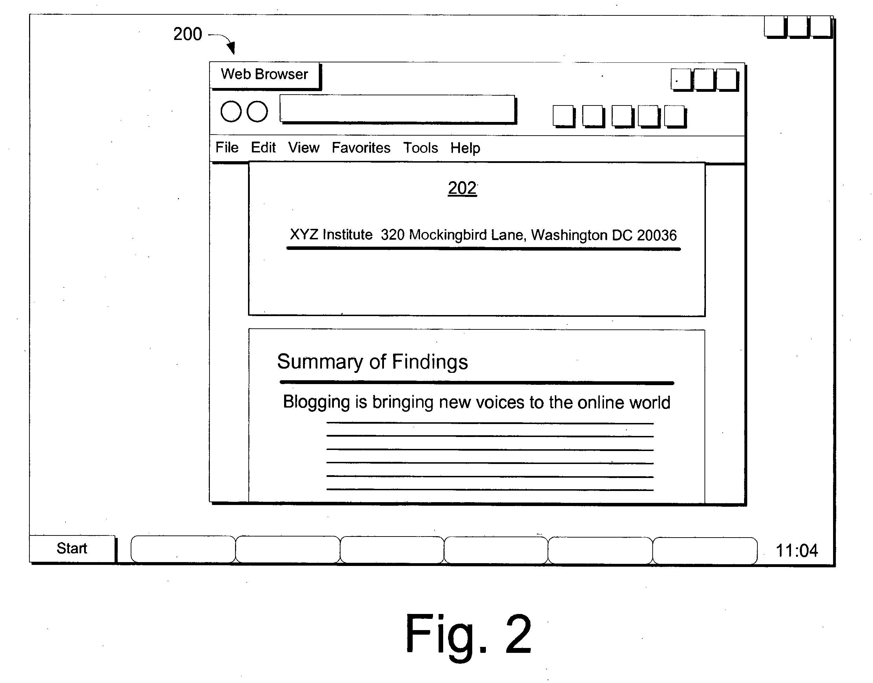

In one or more embodiments, the menu can accommodate a large number of services. In at least some embodiments, a default menu can be rendered for the user. For example, the default menu can provide a listing for each of the services that a user has installed. In addition, in at least some embodiments, a cascading menu can be accessed from the default menu and can be used to show multiple services grouped by category. This can be useful because a user may have multiple different services of the same type, such as multiple mapping services. This way, the user can easily parse all the services using the default menu and then use an expanded cascading menu to search for different services. As an example, consider Fig. 2.

Fig. 2 illustrates a user interface for a Web browser generally at 200. In this example, a user has opened the Web browser on their desktop and has opened, using the browser, a web page 202.

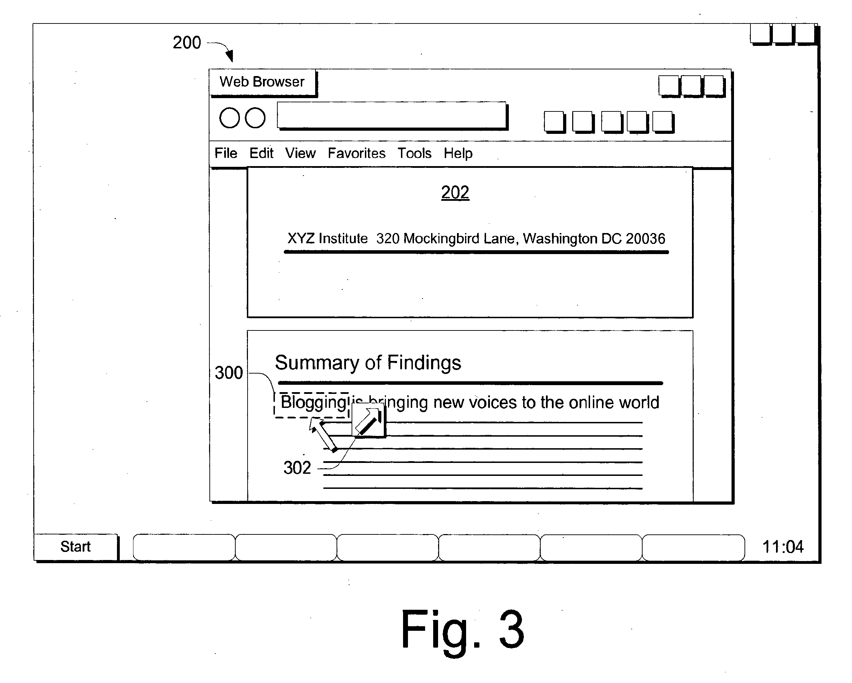

Referring to Fig. 3, the user has selected the text "Blogging" with their cursor, indicated by the dashed box at 300. Responsive to this user action, a user interface instrumentality in the form of an in-page discovery button 302 is rendered adjacent the user's selection. The in-page discovery button indicates to the user that one or more services have been ascertained to be relevant to the user's selection. In the illustrated and described embodiment, a rendering algorithm described below is utilized to render the in-page discovery button in a location that does not obscure the user's selection and, at the same time, is close to or within the user's field of view to alert the user to the fact that one or more services are available for selection.

At this point, the user can take further action to expose a list or menu of available services. In the illustrated and described embodiment, this further action can comprise clicking on or otherwise selecting the in-page discovery button 302. In at least some embodiments, a user can indicate a selection of the in-page discovery button by using their keyboard or other input device. For example, responsive to the rendering of the in-page discovery button, a user can enter a certain hot key combination to indicate their selection.

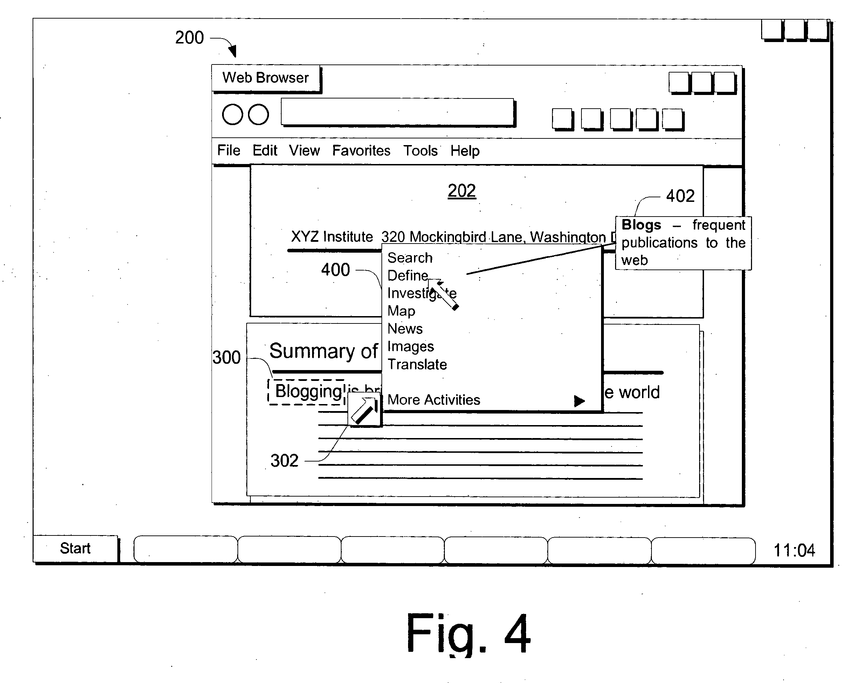

Responsive to selecting the in-page discovery button, a list or menu of relevant services can be presented to the user. As an example, consider Fig. 4.

There, a user has selected the in-page discovery button 302. Responsive to the user's selection of the in-page discovery button, a list or menu 400 of relevant services is rendered for the user. As shown, the services include, by way of example and not limitation, a search service, a define service, an investigate service, a map service, a news service, an images service, and a translate service. In addition, a "More Activities" selection is provided to enable the user to select and see a cascading menu as described above and below. In this particular example, list or menu 400 constitutes a default menu. In at least some embodiments, a default menu can include one service in each different service category. Which service to display in a default menu can be decided upon using any suitable criteria. For example, a default menu might contain user-designated favorite services. Alternately, the default menu might contain the last services used by the user. Other criteria can, of course, be used.

Once the list or menu 400 is presented for the user, the user may opt to view a preview of a particular service by taking a further user action. In this specific example, the user hovers their cursor over or near the Define service. Responsively, a preview 402 is rendered for the user. The preview is logically connected with the selected service by virtue of a leader which, in this example, constitutes a visual line from the service to the preview 402.

In this particular example, the preview briefly defines the term that has been selected by the user. In this example, when a user hovers their cursor on or near a service, the user's selection which, in this case is the term "blogging", is communicated over the Web to a server. The server receives the user's selection and, responsively, returns renderable data that is used to populate the preview 402.

At this point, the user may or may not choose to execute the service. If the user chooses to execute the service by, for example, clicking on the preview 400, a full navigation to a definition site can take place. In one or more embodiments, the definition site can be automatically opened in a new tab in the user's browser. Alternately or additionally, the user can be navigated to the definition site with focus placed on the definition site.

In at least some embodiments, a preview can also include one or more links that can be selected by the user as by clicking on a particular link. By clicking on a particular link, a navigation to that link can take place in any of the ways mentioned above. Further, a navigation can take place within a window in which the preview is rendered as well.

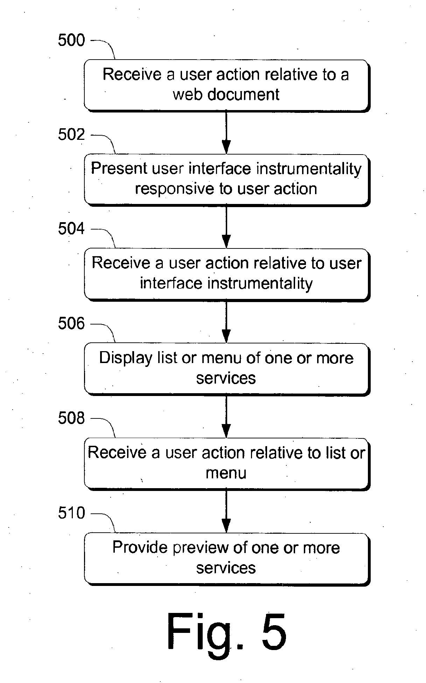

Fig. 5 is a flow diagram that describes steps in a method in accordance with one or more embodiments. The method can be implemented in connection with any suitable hardware, software, firmware, or combination thereof. In at least some embodiments, the method can be implemented by a suitably configured application such as a Web browser. In at least some embodiments, the method can be implemented by a service preview module that is a part of or accessible by an application such as a Web browser.

Step 500 receives a user action relative to a web document. Any suitable user action can be used. For example, a user action can comprise selecting a portion of the content of the particular web document. In the example above, the user action constituted selecting a portion of text. Step 502 presents a user interface instrumentality responsive to the user action. Any suitable user interface instrumentality can be used. In the example above, a user interface instrumentality in the form of an in-page discovery button can be rendered for the user. Step 504 receives a user action relative to the user interface instrumentality. Any suitable user action can be used. For example, in at least some embodiments, a suitable user action can comprise clicking on or otherwise selecting the user interface instrumentality.

Step 506 displays, responsive to the user's action, a list or menu of one or more services that are relevant to the user's selection. Step 508 receives a user action relative to the list or menu. Any suitable user action can be used. In the example provided above, the user action comprises hovering a cursor on or near a particular displayed service. Step 510 provides, responsive to the user's action, a preview of one or more services. An example of how this can be done is provided above.

### Example Cascading Menu

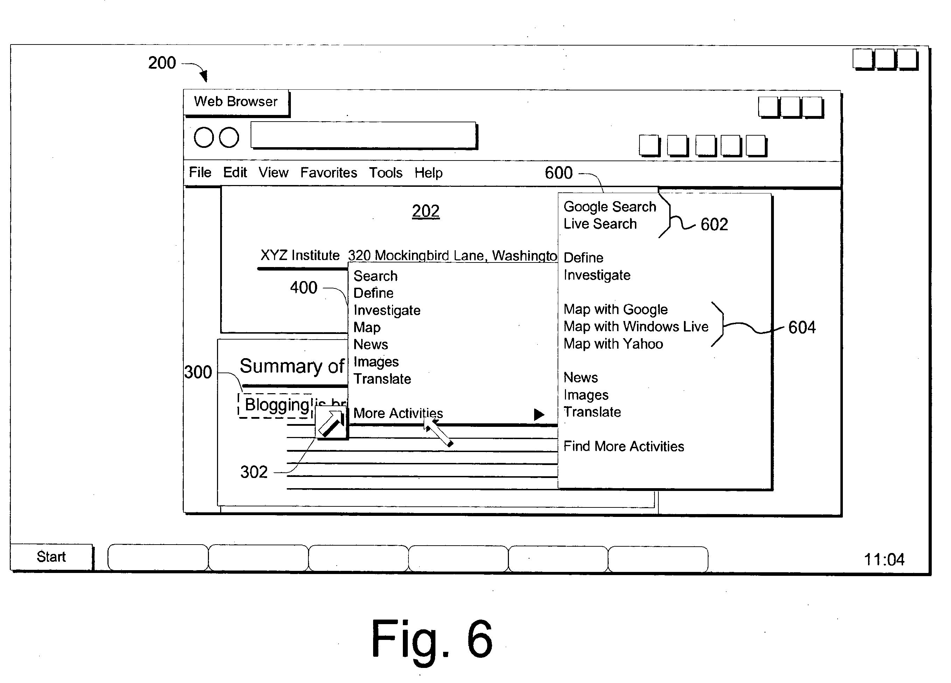

As noted above, a "More Activities" selection can be provided in the list or menu to enable the user to select and see a cascading menu in which services are categorized by type. When the user selects the "More Activities" selection, a list or menu of services categorized by types can be presented for the user. As an example, consider Fig. 6.

There, the user has selected the "More Activities" selection by virtue of clicking on the selection with their cursor. Resp**o**nsively, a cascading list or menu 600 is presented in which various services are categorized by type. In the illustrated and described embodiment, a search service type 602 and a map service type 604 are presented in the cascading list or menu. In this particular example, the search service type 602 includes two different search services from which the user can select. Similarly, the map service type 604 includes three mapping services from which the user can select. Having a cascading list or menu can enable a user to be exposed to his or her full complement of relevant services. From this cascading list or menu, the user can then select a service to be executed.

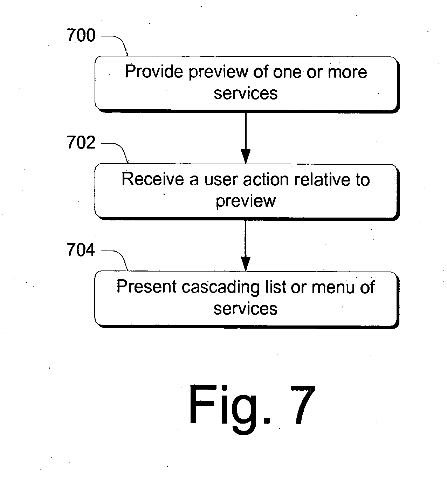

Fig. 7 is a flow diagram that describes steps in a method in accordance with one or more embodiments. The method can be implemented in connection with any suitable hardware, software, firmware, or combination thereof. In at least some embodiments, the method can be implemented by a suitably configured application such as a Web browser. In at least some embodiments, the method can be implemented by a service preview module that is a part of or accessible by an application such as a Web browser.

Step 700 provides a preview of one or more services. The step can be accomplished in any suitable way. In at least some embodiments, the step can be accomplished as described above in relation to Fig. 5. Step 702 receives a user action relative to the preview. Any suitable user action can be used. In at least some embodiments, the user action can comprise clicking on or otherwise selecting an option to expose a cascading list or menu of services. Step 704 presents, responsive to the user action, a cascading list or menu of services. In the illustrated and described embodiment, the cascading list or menu of services categorizes one or more of the services in accordance with a service type. An example of how this can be done is provided above.

### Example Rendering Algorithm

As noted above, a rendering algorithm can be used to ascertain a location to render the in-page discovery button. In operation, the in-page discovery button is rendered in a manner such that it does not distract a user from reading or viewing the content that has been selected. It is also rendered at a location where the cursor does not overlap or touch the button. In one or more embodiments, the in-page discovery button is rendered relative to an end point of the user's selection. Specifically, if the user's cursor is determined to be closer to one of the endpoints of the user's selection, the in-page discovery button is rendered closer to that endpoint. This provides a visual cue that, from a location standpoint, is closer to a location of the user's last focus.

For example, if a user makes a selection by clicking and dragging across a portion of text from the beginning of the text to the end of the text, the user's cursor will be located adjacent the end of the text. In this case, the in-page discovery button will be rendered proximate the end of the text. This is because the location of the user's last focus was likely to be at the end of the text. Similarly, if the user makes a selection by clicking and dragging across a portion of text from the end of the text to the beginning of the text, the user's cursor will be located adjacent the beginning of the text. In this case, the in-page discovery button will be rendered proximate the beginning of the text. This is because the location of the user's last focus was likely to be at the beginning of the text. In at least some embodiments, the in-page discovery button is rendered in a manner such that it does not overlap selected text.

### Other Invocations of Service Previews

In the illustrated embodiments above, invocation of service previews occurred responsive to a user action in the form of a selection of some type. It is to be appreciated and understood that service previews can be invoked from other user actions. For example, a user may take a particular action on a page itself using, for example, a user interface feature comprising part of the application. For example, if a user is reading an article and wishes to view other similar articles, they may click on a "Page Menu" button located in the Web browser's frame. By clicking on the "Page Menu" button, a drop-down menu can be presented to the user in which various options can be presented. For example, such options can include cut, copy, and paste options, as well as "Save As", "Send", "Zoom" and the like. In one or more embodiments, one of the options presented as part of a "Page Menu" drop-down menu can be an option that displays various services available for that page. The services can be displayed in any suitable manner such as those manners described above. For example, a list or menu of services can be presented. This list or menu can, but need not be a default list or menu as in the above examples. If the list or menu is a default list or menu, other functionality such as that described above can be provided to expose the user to a cascading list or menu. In addition, the service preview functionality as described above can be accessible from this drop-down menu.

### Example System

Fig. 8 illustrates an example computing device 800 that can implement the various embodiments described above. Computing device 800 can be, for example, computing device 102 of Fig. 1 or any other suitable computing device.

Computing device 800 includes one or more processors or processing units 802, one or more memory and/or storage components 804, one or more input/output (I/O) devices 806, and a bus 808 that allows the various components and devices to communicate with one another. Bus 808 represents one or more of any of several types of bus structures, including a memory bus or memory controller, a peripheral bus, an accelerated graphics port, and a processor or local bus using any of a variety of bus architectures. Bus 808 can include wired and/or wireless buses.

Memory/storage component 804 represents one or more computer storage media. Component 804 can include volatile media (such as random access memory (RAM)) and/or nonvolatile media (such as read only memory (ROM), Flash memory, optical disks, magnetic disks, and so forth). Component 804 can include fixed media (e.g., RAM, ROM, a fixed hard drive, etc.) as well as removable media (e.g., a Flash memory drive, a removable hard drive, an optical disk, and so forth).

One or more input/output devices 806 allow a user to enter commands and information to computing device 800, and also allow information to be presented to the user and/or other components or devices. Examples of input devices include a keyboard, a cursor control device (e.g., a mouse), a microphone, a scanner, and so forth. Examples of output devices include a display device (e.g., a monitor or projector), speakers, a printer, a network card, and so forth.

Various techniques may be described herein in the general context of software or program modules. Generally, software includes routines, programs, objects, components, data structures, and so forth that perform particular tasks or implement particular abstract data types. An implementation of these modules and techniques may be stored on or transmitted across some form of computer readable media. Computer readable media can be any available medium or media that can be accessed by a computing device. By way of example, and not limitation, computer readable media may comprise "computer storage media".

"Computer storage media" include volatile and non-volatile, removable and non-removable media implemented in any method or technology for storage of information such as computer readable instructions, data structures, program modules, or other data. Computer storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

### Conclusion

In one or more embodiments, users are able to access small previews of a service from within their present application context. For example, users can install various services in an application, such as a Web browser. Based upon a user action within the application, a user interface instrumentality can be presented to the user to enable them to access a list of services that are installed in the application. By taking an action with respect to the list of services, a user can access a preview of the service. For example, in at least some embodiments, if a user hovers their cursor over a particular listed service, they can receive a preview of that service from which further service functionality can be accessed. Further service functionality can be accessed from a preview by interacting with the preview in a particular way. For example, a user can click on the service preview in order to access additional service functionality. By doing so, a user can be navigated to the additional service functionality, as will become apparent below. Alternately or additionally, a user can click on a link within the preview in order to access further service functionality.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A computer-implemented method comprising:
- presenting (502) a user interface instrumentality (302) responsive to a user action within an application, the user interface instrumentality (302) enabling a user to access a menu of Web-accessible services (400) that are installed in the application, the menu of Web-accessible services including services that are found to be relevant to the user action within the application;
- responsive to a user action with respect to the menu of Web-accessible services, accessing (510) a preview (402) of a service from within a present application context; and
logically connecting the preview with a selected service by virtue of a leader, the leader constituting a visual line from the selected service to the preview.

2. The method of claim 1, wherein said user action with respect to the menu of Web-accessible services comprises hovering a cursor over a listed service.

3. The method of claim 1, wherein said user action within an application comprises making a selection using an input device.

4. The method of claim 1, wherein the preview is configured to provide further access to service functionality.

5. The method of claim 4,
wherein a user can access further service functionality by clicking on the preview; or wherein access to further service functionality is provided by performing a web navigation.

6. The method of claim 1,
wherein the application comprises a Web browser; or
wherein the application does not comprise a Web browser.

7. The method of claim 1, wherein said presenting is performed:
by presenting said user interface instrumentality relative to an end point of a user's selection; or
by presenting the user interface instrumentality comprising a discovery button.

8. A system comprising :
one or more computer-readable storage media (106);
computer-readable instructions on the one or more computer-readable storage media which, when executed, provide a Web browser (110, 200) configured to:
present a user interface instrumentality (302) responsive to a user action within the Web browser (200), the user interface instrumentality (302) enabling a user to access a default menu (400) of Web-accessible services including services that are found to be relevant to the user action within the web browser that are installed in the Web browser (110, 200);
responsive to a user action with respect to the default menu (400) of Web-accessible services, access a preview (402) of a service from within a present web browser context; and
access, from the default menu (400), a cascading menu (600) that shows multiple services grouped by category,
wherein the preview is logically connected with a selected service by virtue of a leader, the leader constituting a visual line from the selected service to the preview.

9. The system of claim 8, wherein said user action with respect to the default menu of Web-accessible services comprises hovering a cursor over a listed service.

10. The system of claim 8, wherein said user action within the Web browser comprises making a selection using an input device.

11. The system of claim 8, wherein the preview is configured to provide further access to service functionality.

12. The system of claim 8,
wherein a user can access further service functionality by clicking on the preview; or
wherein access to further service functionality is provided by performing a Web navigation.

13. The system of claim 8, wherein the preview is configured to provide further access to service functionality, wherein access to further service functionality is provided by performing a Web navigation, wherein the Web navigation opens a new tab in the Web browser.

14. The system of claim 8,
wherein the user interface instrumentality comprises a discovery button; or
wherein said user interface instrumentality is presented relative to an end point of a user's selection.

15. The system of claim 8, wherein said user action within the Web browser comprises taking an action on a user interface feature comprising part of the Web browser.

## Patentansprüche

1. Computerimplementiertes Verfahren, das die folgenden Schritte aufweist:
- Präsentieren (502) eines Benutzerschnittstellenmittels (302) als Reaktion auf eine Benutzeraktion innerhalb einer Anwendung, wobei das Benutzerschnittstellenmittel (302) es einem Benutzer ermöglicht, auf ein Menü von über das Web zugänglichen Dienste (400) zuzugreifen, die in der Anwendung installiert sind, wobei das Menü der über das Web zugänglichen Dienste Dienste umfasst, die für die Benutzeraktion innerhalb der Anwendung als relevant befunden werden;
- als Reaktion auf eine Benutzeraktion bezüglich der Menüs der über das Web zugänglichen Dienste, Zugreifen (510) auf eine Vorschau (402) eines Dienstes aus einem gegenwärtigen Anwendungskontext heraus, und
- logisches Verbinden der Vorschau mit einem ausgewählten Dienst vermöge einer Führungseinrichtung, wobei die Führungseinrichtung eine sichtbare Linie vom ausgewählten Dienst zur Vorschau bildet.

2. Verfahren nach Anspruch 1, wobei die Benutzeraktion bezüglich des Menüs der über das Web zugänglichen Dienste das Schweben eines Cursors über einen aufgelisteten Dienst umfasst.

3. Verfahren nach Anspruch 1, wobei die Benutzeraktion innerhalb einer Anwendung das Vornehmen einer Auswahl unter Verwendung einer Eingabevorrichtung aufweist.

4. Verfahren nach Anspruch 1, wobei die Vorschau konfiguriert ist, einen weiteren Zugriff auf eine Dienstfunktionalität bereitzustellen.

5. Verfahren nach Anspruch 4,
wobei ein Benutzer auf eine weitere Dienstfunktionalität durch Klicken auf die Vorschau zugreifen kann; oder
wobei der Zugriff auf eine weitere Dienstfunktionalität durch Durchführen einer Webnavigation bereitgestellt wird.

6. Verfahren nach Anspruch 1,
wobei die Anwendung einen Webbrowser aufweist; oder
wobei die Anwendung keinen Webbrowser aufweist.

7. Verfahren nach Anspruch 1, wobei das Präsentieren durchgeführt wird:
durch Präsentieren des Benutzerschnittstellenmittels bezüglich eines Endpunkts einer Benutzerauswahl; oder
durch Präsentieren des Benutzerschnittstellenmittels, das eine Fundschaltfläche aufweist.

8. System, das Folgendes aufweist:
ein oder mehrere computerlesbare Speichermedien (106);
computerlesbare Anweisungen auf dem einen oder den mehreren computerlesbaren Speichermedien, die,
wenn sie ausgeführt werden, einen Webbrowser (110, 200) bereitstellen, der konfiguriert ist:
ein Benutzerschnittstellenmittel (302) als Reaktion auf eine Benutzeraktion im Webbrowser bereitzustellen (200), wobei das Benutzerschnittstellenmittel (302) es einem Benutzer ermöglicht, auf ein vorgegebenes Menü (400) von über das Web zugänglichen Diensten zuzugreifen, das Dienste umfasst, die für die Benutzeraktion innerhalb des Webbrowsers als relevant befunden werden, wobei die über das Web zugänglichen Dienste im Webbrowser (110, 200) installiert sind;
als Reaktion auf eine Benutzeraktion bezüglich des vorgegebenen Menüs (400) der über das Web zugänglichen Dienste auf eine Vorschau (402) eines Dienstes aus dem gegenwärtigen Webbrowserkontext heraus zuzugreifen; und
aus dem vorgegebenen Menü (400) auf ein kaskadenförmiges Menü (600) zuzugreifen, das mehrere Dienste zeigt, die nach Kategorie gruppiert sind,
wobei die Vorschau vermöge einer Führungseinrichtung logisch mit einem ausgewählten Dienst verbunden ist, wobei die Führungseinrichtung eine sichtbare Linie vom ausgewählten Dienst zur Vorschau bildet.

9. System nach Anspruch 8, wobei die Benutzeraktion bezüglich des vorgegebenen Menüs der über das Web zugänglichen Dienste das Schweben eines Cursors über einen aufgelisteten Dienst umfasst.

10. System nach Anspruch 8, wobei die Benutzeraktion innerhalb des Webbrowsers das Vornehmen einer Auswahl unter Verwendung einer Eingabevorrichtung aufweist.

11. System nach Anspruch 8, wobei die Vorschau konfiguriert ist, einen weiteren Zugriff auf eine Dienstfunktionalität bereitzustellen.

12. System nach Anspruch 8,
wobei ein Benutzer auf eine weitere Dienstfunktionalität durch Klicken auf die Vorschau zugreifen kann; oder
wobei der Zugriff auf eine weitere Dienstfunktionalität durch Durchführen einer Webnavigation bereitgestellt wird.

13. System nach Anspruch 8, wobei die Vorschau konfiguriert ist, einen weiteren Zugriff auf eine Dienstfunktionalität bereitzustellen, wobei der Zugriff auf eine weitere Dienstfunktionalität durch Durchführen einer Webnavigation bereitgestellt wird, wobei die Webnavigation eine neue Registerkarte im Webbrowser öffnet.

14. System nach Anspruch 8,
wobei das Benutzerschnittstellenmittel eine Fundschaltfläche aufweist; oder
wobei das Benutzerschnittstellenmittel bezüglich eines Endpunkts einer Benutzerauswahl präsentiert wird.

15. System nach Anspruch 8, wobei die Benutzeraktion im Webbrowser das Ergreifen einer Maßnahme an einem Benutzerschnittstellenmerkmal aufweist, das einen Teil des Webbrowsers aufweist.

## Revendications

1. Procédé mis en oeuvre par ordinateur, consistant à :
- présenter (502) un instrument d'interface utilisateur (302) en réponse à une action d'utilisateur au sein d'une application, l'instrument d'interface utilisateur (302) permettant à un utilisateur d'accéder à un menu de services accessibles sur le web (400) qui sont installés dans l'application, le menu de services accessibles sur le web incluant des services qui sont jugés pertinents en regard de l'action d'utilisateur au sein de l'application ;
- en réponse à une action d'utilisateur relativement au menu de services accessibles sur le web, accéder (510) à un aperçu (402) d'un service à partir d'un contexte d'application en cours ; et
connecter de manière logique l'aperçu à un service sélectionné en vertu d'un guide, le guide constituant une ligne visuelle allant du service sélectionné à l'aperçu.

2. Procédé selon la revendication 1, dans lequel ladite action d'utilisateur relativement au menu de services accessibles sur le web consiste à faire passer un curseur sur un service répertorié.

3. Procédé selon la revendication 1, dans lequel ladite action d'utilisateur au sein d'une application consiste à mettre en oeuvre une sélection en utilisant un dispositif de saisie.

4. Procédé selon la revendication 1, dans lequel l'aperçu est configuré de manière à fournir un accès supplémentaire à une fonctionnalité de service.

5. Procédé selon la revendication 4,
dans lequel un utilisateur peut accéder à la fonctionnalité de service supplémentaire en cliquant sur l'aperçu ; ou
dans lequel l'accès à la fonctionnalité de service supplémentaire est fourni par la mise en oeuvre d'une navigation web.

6. Procédé selon la revendication 1,
dans lequel l'application comporte un navigateur web ; ou
dans lequel l'application ne comporte pas de navigateur web.

7. Procédé selon la revendication 1, dans lequel ladite présentation est mise en oeuvre :
en présentant ledit instrument d'interface utilisateur relativement à un point d'extrémité d'une sélection de l'utilisateur ; ou
en présentant l'instrument d'interface utilisateur qui comporte un bouton de découverte.

8. Système comprenant :
un ou plusieurs supports de stockage lisibles par ordinateur (106) ;
des instructions lisibles par ordinateur sur ledit un ou lesdits plusieurs supports de stockage lisibles par ordinateur, qui, lorsqu'elles sont exécutées, fournissent un navigateur web (110, 200) configuré de manière à :
présenter un instrument d'interface utilisateur (302) en réponse à une action d'utilisateur au sein du navigateur web (200),
l'instrument d'interface utilisateur (302) permettant à un utilisateur d'accéder à un menu par défaut (400) de services accessibles sur le web, incluant des services qui sont jugés pertinents en regard de l'action d'utilisateur au sein du navigateur web, lesquels sont installés dans le navigateur web (110, 200) ;
en réponse à une action d'utilisateur relativement au menu par défaut (400) de services accessibles sur le web, accéder à un aperçu (402) d'un service à partir d'un contexte de navigateur web en cours ; et
accéder, à partir du menu par défaut (400), à un menu en cascade (600) qui présente de multiples services regroupés par catégorie ;
dans lequel l'aperçu est connecté de manière logique à un service sélectionné en vertu d'un guide, le guide constituant une ligne visuelle allant du service sélectionné à l'aperçu.

9. Système selon la revendication 8, dans lequel ladite action d'utilisateur relativement au menu par défaut de services accessibles sur le web consiste à faire passer un curseur sur un service répertorié.

10. Système selon la revendication 8, dans lequel ladite action d'utilisateur au sein du navigateur web consiste à mettre en oeuvre une sélection en utilisant un dispositif de saisie.

11. Système selon la revendication 8, dans lequel l'aperçu est configuré de manière à fournir un accès supplémentaire à une fonctionnalité de service.

12. Système selon la revendication 8,
dans lequel un utilisateur peut accéder à une fonctionnalité de service supplémentaire en cliquant sur l'aperçu ; ou
dans lequel l'accès à la fonctionnalité de service supplémentaire est fourni par la mise en oeuvre d'une navigation web.

13. Système selon la revendication 8, dans lequel l'aperçu est configuré de manière à fournir un accès supplémentaire à une fonctionnalité de service, dans lequel l'accès à la fonctionnalité de service supplémentaire est fourni par la mise en oeuvre d'une navigation web, dans lequel la navigation web ouvre un nouvel onglet dans le navigateur web.

14. Système selon la revendication 8,
dans lequel l'instrument d'interface utilisateur comprend un bouton de découverte ; ou
dans lequel ledit instrument d'interface utilisateur est présenté relativement à un point d'extrémité d'une sélection de l'utilisateur.

15. Système selon la revendication 8, dans lequel ladite action d'utilisateur au sein du navigateur web consiste à mettre en oeuvre une action sur une fonction d'interface utilisateur comprenant une partie du navigateur web.
